# DEMANDE DE BREVET EUROPEEN

(11) **EP 1 136 221 A1**
(43) Date de publication de la demande: **26.09.2001**
(21) Numéro de dépôt: 01420065.3
(22) Date de dépôt: 15.03.2001
(51) Int. Cl.: B29C 45/17

(54) **Procédé de fabrication de corps creux par injection-liquide**

(30) Priorité: 17.03.2000 FR 0003446
(71) Demandeur: RHODIA ENGINEERING PLASTICS S.A., 69192 Saint-Fons (FR)
(72) Inventeur: Lambert, André, 38121 Reventin Vaugris (FR); Op de Laak, Marcel, 79110 Freiburg (DE); Potsch, Gerhardt, 79108 Freiburg (DE); Switzer, Klaus, 79276 Reute (DE)
(74) Mandataire: Esson, Jean-Pierre

(57) **Abrégé**

La présente invention concerne un procédé de fabrication de corps creux par la mise en oeuvre d'une technique de moulage appelée "moulage par injection liquide". Le procédé de fabrication de l'invention de corps creux par la technique de l'injection liquide consiste à injecter dans un moule une composition comprenant comme matrice principale un polymère thermoplastique et comme charge de renfort un composé fibreux de facteur de forme L/D supérieur ou égal à 30, et une charge particulaire de facteur de forme L/D inférieur à 20. Le polymère thermoplastique est avantageusement une résine polyamide, les charges étant d'une part des fibres de verre et d'autre part des billes de verre ou des fibres de verre broyées.

Le procédé de l'invention permet de fabriquer par injection liquide des tubes ou conduits pour fluides tels que carburant, fluide de refroidissement.

## Description

La présente invention concerne un procédé de fabrication de corps creux par la mise en oeuvre d'une technique de moulage appelée "moulage par injection liquide".

Elle se rapporte plus particulièrement à un procédé de fabrication de corps creux tels que tubes, tuyaux, conduits par moulage d'une composition thermoplastique.

De nombreux articles ou pièces ont des formes creuses. Ainsi, les réservoirs, les conduits pour carburant, air ou liquide de refroidissement dans les moteurs à explosion ou à combustion interne sont des corps creux qui doivent résister mécaniquement aux agressions extérieures, mais également présenter une face interne la plus lisse possible pour éviter de perturber l'écoulement des fluides. En outre, ces conduits ont des formes complexes pour permettre leur montage dans les moteurs.

Ces conduits sont de plus en plus souvent réalisés à partir d'une composition thermoplastique pour diminuer le poids du moteur et également pour des considérations économiques de coûts de fabrication.

Parmi les techniques de moulage utilisées pour la réalisation de ces pièces, on peut citer l'extrusion par soufflage, le moulage par injection et le moulage par injection liquide.

La première technique d'extrusion soufflage est notamment utilisée pour la fabrication de corps creux présentant un diamètre élevé et une épaisseur de paroi relativement élevée.

La seconde technique d'injection requiert la fabrication de l'article ou pièce en deux parties qui seront soudées par exemple par un procédé de soudage par vibrations. Ce procédé présente de nombreux inconvénients tant d'un point de vue économique que technique. Ainsi, il est nécessaire pour obtenir une bonne soudure d'utiliser des compositions thermoplastiques particulières, des formes et des bords de chaque demi-pièce adaptés.

La troisième technique de moulage par injection liquide connaît un fort développement pour la fabrication de corps creux et notamment de conduits ou tuyaux.

L'invention concerne essentiellement la fabrication de corps creux par mise en oeuvre de cette dernière technique de moulage.

Cette technique est par exemple décrite la revue Kunststoff de septembre 1999.

Brièvement, cette technique consiste, dans un premier mode de réalisation, à injecter dans un moule de forme correspondante à celle de la pièce à mouler, une certaine quantité de matière insuffisante pour remplir entièrement le moule. Puis, à introduire dans la masse ainsi injectée, en un ou plusieurs points, une aiguille pour permettre l'alimentation d'un liquide, de préférence de l'eau, sous pression. Le liquide va générer une cavité dans la masse fondue injectée en forçant le polymère à épouser les parois du moule. Après refroidissement, la pièce est démoulée. Dans un second mode de réalisation, le moule est rempli totalement avec la composition thermoplastique, le liquide sous pression est injecté dans la dite masse pour refouler une partie de la matière hors du moule et ainsi former une cavité tout en maintenant une partie de la matière contre les parois du moule jusqu'à prise en masse ou solidification de celle-ci.

Ces techniques sont notamment utilisées pour réaliser des pièces à paroi épaisse ou pour diminuer la quantité de matière des pièces massiques.

Cette technique, plus particulièrement le mode de réalisation à refoulement de matière, est peut être utilisée pour la fabrication de corps creux à paroi de faible épaisseur tels que des conduits, tuyaux etc....

Toutefois, pour réaliser ces articles dans lesquels vont circuler des fluides, il est nécessaire d 'obtenir une surface interne aussi régulière que possible, une épaisseur de paroi également régulière. En outre, pour des raisons de productivité il est également obligatoire que la durée de cycle de moulage soit la plus rapide possible.

Ces différentes obligations sont actuellement difficiles à obtenir simultanément ce qui limite l'utilisation de cette technique pour la fabrication de certains articles, notamment des conduits pour essence, liquide de refroidissement des moteurs à explosion ou à combustion interne.

Un des buts de la présente invention est de remédier à ces inconvénients en proposant un procédé de fabrication d'articles par la technique d'injection liquide en utilisant une composition de moulage présentant des caractéristiques particulières permettant d'obtenir des articles présentant des caractéristiques d'état de surface, homogénéité de forme et temps de cycle améliorées et satisfaisantes pour une fabrication industrielle.

A cet effet, l'invention propose un procédé de fabrication de corps creux par la technique de l'injection liquide consistant à injecter dans un moule une composition comprenant comme matrice principale un polymère thermoplastique et comme charge de renfort un composé fibreux de facteur de forme supérieur à 20 de préférence L/D supérieur ou égal à 30,caractérisé en ce que la composition comprend également une charge particulaire de facteur de forme L/D inférieur à 20.

Le liquide préféré pour la mise en oeuvre de l'invention est l'eau.

Selon un premier mode de réalisation avantageux de l'invention les compositions comprennent en plus un composé favorisant la nucléation du polymère.

Selon un second mode de réalisation avantageux de l'invention les compositions comprennent en plus un agent retardateur de cristallisation ou inhibiteur de cristallisation, par exemple un polyamide semi-aromatique ou un polyamide 6 lorsque la composition est à base de polyamide 66.

Une composition comprenant des charges de renfort de tailles différentes, c'est-à-dire présentant un spectre de répartition des dimensions des charges étalée entre deux valeurs ou bimodale permet de manière surprenante d'obtenir une répartition homogène de la matière dans tout le moule et donc d'obtenir des épaisseurs de parois du corps creux homogènes et régulières. De plus, la combinaison de ces charges et d'un agent nucléant permet d'obtenir un état de surface interne convenable pour obtenir un écoulement des fluides correct.

Selon une caractéristique préférentielle de l'invention, la charge fibreuse est de la fibre de verre, fibre de céramique, fibre de carbone, fibre en polymère thermostable. De préférence, cette charge fibreuse est constituée par de la fibre de verre. Les fibres de verre généralement utilisées ont une longueur comprise entre 1 mm et 5 mm et un diamètre compris entre 5µm et 20 µm. Au cours du mélange et malaxage avec le polymère fondu, ces fibres sont cassées et présentent une longueur moyenne dans la composition comprise entre 300 et 500 µm.

Avantageusement, cette fibre peut comprendre un ensimage qui permet d'améliorer certaines propriétés de la composition. Plus particulièrement, elle peut comprendre un ensimage résistant à la glycolyse, notamment quand l'article ou la pièce à fabriquer est destinée à être en contact avec un liquide contenant de l'alcool tel que les fluides de refroidissement ou les carburants

Selon une autre caractéristique de l'invention, la charge particulaire est avantageusement choisie dans le groupe comprenant les charges minérales, les billes de verre, les écailles de verre, les fibres de verre broyées.

Dans un mode de réalisation préféré de l'invention, la charge particulaire est avantageusement des billes de verre de diamètre compris entre 10 µm et 60 µm ou des fibres de verre broyées de longueur inférieure à 250µm et diamètre inférieur à 20 µm.
La concentration totale en poids des charges fibreuse et particulaire dans la composition peut varier dans de grandes limites, et est comprise, par exemple, entre 10 % et 60 % du poids total de la composition. Le rapport pondéral entre la charge particulaire et la charge fibreuse est avantageusement compris entre 0,2 et 10, préférentiellement entre 0,5 et 4.

Selon un mode de réalisation particulier de l'invention, la composition comprend un composé favorisant la nucléation de la composition pour ainsi obtenir notamment une durée de cycle de moulage courte. Ces composés appelés également agents nucléants sont généralement des solides finement divisés qui agissent comme un noyau de nucléation.

A titre d'exemple, de tels agents nucléants pour les polyamides sont décrits dans les brevets US 2 855 377, 3 549 651, 4 200 657, 3 867 339, 4 397 979, 4 749 736.

On peut citer comme exemple d'agents nucléants convenables pour l'invention dans le cas où le polymère thermoplastique est un polyamide, les phénylphosphonates de zinc, sodium ou calcium, les métasilicates, aluminates, métaphosphates de lithium, de zirconium, les fluorures de magnésium, de lithium, calcium.

D'autres composés comme le talc, le graphite, l'oxyde d'antimoine peuvent être utilisés comme agent de nucléation.

Cette liste n'est donnée qu'à titre indicatif. L'utilisation d'agents nucléants non énumérés ci-dessus est incluse dans le cadre de l'invention.

La concentration en agent nucléant dans la composition est avantageusement inférieure à 1 % en poids par rapport à la composition totale, de préférence comprise entre 50 ppm et 600 ppm.

L'addition de l'agent nucléant peut être réalisée à différents moments du procédé de fabrication. Ainsi, il peut être ajouté dans le polymère au cours de la polymérisation ou mélanger à celui-ci dans l'extrudeuse. Il est également possible de mélanger ce composé avec des granulés de polymère pour effectuer un revêtement des granulés par l'agent nucléant.

Selon une autre caractéristique de l'invention, le polymère thermoplastique est un polymère ou un mélange de polymère choisi dans le groupe comprenant les polyesters, polypropylènes, polyamides.

Selon une caractéristique préférentielle de l'invention, la matrice thermoplastique comprend au moins un polyamide choisis dans le groupe comprenant des homopolyamides ou copolyamides majoritairement aliphatique. Ainsi les polyamides les plus utilisés sont le poly(hexaméthylène adipamide) et le poly (ε-caproamide) leurs copolymères ou mélanges.

Toutefois, d'autres polyamides obtenus à partir soit d'autres lactames, soit d'autres diacides et/ou diamines sont également convenables pour l'invention. On peut ainsi citer les polyamides 4,6 ; polyamide 6,10 ; polyamide 6,12 ; polyamide 12, les copolyamides comprenant des unités dérivés de dimère d'acides gras comme le polyamide 6/36 ou les copolyamides 6-6/36.

Il est également possible d'utiliser des polyamides semi-aromatiques cristallins obtenus à partir de diamine aliphatique comme l'hexaméthylène diamine et/ou la méthyl-5 pentaméthylène diamine et de diacides aromatiques comme les acides téréphtalique et isophtalique en mélange ou non avec un acide aliphatique tel que l'acide adipique, par exemple.

La composition peut également comprendre d'autres additifs tels que des stabilisants chaleur et/ou lumière des pigments ou colorants, des ignifugeants, des modifiants de ténacité, des additifs facilitant le mélange des composants ou le moulage de la composition, et plus généralement tout additif utilisé habituellement dans le domaine des compositions pour moulage.

Les compositions de l'invention sont généralement préparées par mélange dans une extrudeuse bi-vis ou mono-vis du polyamide et des différentes charges.
La composition est extrudée sous forme de joncs qui sont coupés pour former des granulés.

Ces granulés sont alors alimentés dans les dispositifs ou installations de moulage de pièce et après fusion injectés dans les moules.

Le procédé de l'invention permet de fabriquer par la technique de l'injection gaz des pièces ou articles creux qui présente une épaisseur de paroi régulière et avantageusement d'épaisseur inférieure à 10 mm

Ces pièces ou articles sont notamment des corps creux allongés tels que des conduits, tuyaux, tubulures ou analogues.

Avec l'utilisation d'une composition telle que décrite ci-dessus, la face interne des corps creux est suffisamment lisse pour permettre un écoulement des fluides dans ces corps creux sans perturbation.

Ainsi, le procédé de l'invention permet de fabriquer des conduits, tubulures pour carburant, fluide de refroidissement ou air pour les moteurs à combustion interne ou à explosion.

D'autres avantages, détails de l'invention apparaîtront plus clairement au vu des exemples donnés ci-dessous uniquement à titre indicatif.

Des compositions pour moulage conforme à l'invention sont préparées par mélange dans une extrudeuse bi-vis de type W et P ZSK 40 avec un débit de 50 kg/H et une vitesse de rotation de vis égale à 270 tr/min, à une température de 270°C, des différents composants la constituant.

La composition ainsi préparée est extrudée sous forme de joncs qui sont ensuite coupés en granulés de longueur environ 1,5 mm. La description des compositions préparées est indiquée dans le tableau 1 ci-dessous.

**Tableau 1**

| | | 1 | 2 | 3 | 4 | A |
|---|---|---|---|---|---|---|
| Polyamide 66 Iv = 140 | | 69 | 67 | 69 | 69 | 15 |
| Fibres de verre P 355 | | 15 | 13 | 13 | 15 | 30 |
| Billes de verre | | 15 | 19 | 17 | | - |
| Fibres de verre broyées | | - | - | - | 15 | - |
| Nucléant | PPCa | 0,1 | 0,1 | | 0,1 | 0,1 |
| | Talc | - | - | 0,2 | - | |
| Pigment | | 0,2 | 0,2 | 0,2 | 0,2 | 0,2 |
| Stabilisation chaleur | | 0,28 | 0,28 | 0,28 | 0,28 | 0,28 |
| Cire | | 0,27 | 0,27 | 0,27 | 0,27 | 0,27 |

L'exemple A est un exemple comparatif.

Les fibres de verre utilisées ont une longueur de 3 mm et un diamètre de 10 µm. Elles comprennent un ensimage pour améliorer la résistance à la glycolyse de la composition. Après mélange avec le polyamide, la longueur moyenne des fibres de verre est d'environ 300 µm.

Les billes de verre ont un diamètre de 40 µm.

Les fibres de verre broyées ont une longueur moyenne de 210 µm et un diamètre de 14 µm.

PPCa est un agent nuléant phenylphosphonate de calcium.

Les autres composants pigment, stabilisant chaleur et cire sont ceux habituellement utilisés dans le domaine des compositions polyamide renforcées par des fibres de verre.

Des essais de moulage d'un tube cylindrique de diamètre 20 mm, longueur 400 mm et épaisseur de paroi égale à 3,5 mm ont été réalisés à partir de chaque composition par la technique injection eau en utilisant un dispositif tel que décrit dans la revue Kunstoff de septembre 1999.

L'aptitude des compositions de l'invention à la technique de moulage par injection eau est déterminée par l'état de la surface interne de la pièce. Cet état est qualifié par une note qualitative de 1 à 6, la note 1 correspondant à une surface lisse, la note 6 étant affectée à une surface présentant des défauts de surface perturbant l'écoulement d'un fluide dans le tube.

Les résultats sont rassemblés dans le tableau ci-dessous.

| Exemples | Etat de surface |
|---|---|
| 1 | 3 |
| 2 | 3 |
| 3 | 3 |
| 4 | 4 |
| A | 6 |

## Revendications

1. Procédé de fabrication de corps creux par la technique de l'injection liquide, **caractérisé en ce qu'**il consiste à injecter dans un moule une composition comprenant comme matrice thermoplastique, un polymère thermoplastique et comme charge de renfort un composé fibreux de facteur de forme L/D supérieur à 20, **caractérisé en ce que** la composition comprend également une charge particulaire dont le facteur de forme L/D est inférieur à 20

2. Procédé selon la revendication 1 **caractérisé en ce que** la technique d'injection liquide est l'injection eau.

3. Procédé selon l'une des revendications 1 ou 2 **caractérisé en ce que** la composition comprend un composé favorisant la nucléation de la composition.

4. Procédé selon l'une des revendications précédentes **caractérisé en ce que** le composé fibreux est choisi dans le groupe comprenant la fibre de verre, fibre de céramique, fibre de carbone, fibre en polymère thermostable.

5. Procédé selon la revendication 4, **caractérisé en ce que** le composé fibreux est de la fibre de verre de longueur comprise entre 1 et 5 mm, avant mélange avec le polymère thermoplastique.

6. Procédé selon l'une des revendications précédentes **caractérisé en ce que** la charge particulaire est choisie dans le groupe comprenant les charges minérales, les biles de verre, les fibres de verre broyées, les écailles de verre ou un mélange de celles-ci.

7. Procédé selon la revendication 6, **caractérisé en ce que** la charge particulaire est de la fibre de verre broyée de longueur moyenne inférieure à 250 µm.

8. Procédé selon la revendication 6, **caractérisé en ce que** la charge particulaire est constituée par des billes de verre.

9. Procédé selon l'une des revendications précédentes **caractérisé en ce que** la composition thermoplastique comprend de 10 % à 60 % en poids de charges fibreuses et particulaires par rapport à la composition totale.

10. Procédé selon l'une des revendications précédentes **caractérisé en ce que** le rapport pondéral charge particulaire/charge fibreuse est compris entre 0,2 et 10.

11. Procédé selon l'une des revendications 3 à 10, **caractérisé en ce que** le composé nucléant est présent dans une concentration inférieure à 1 % en poids par rapport à la composition totale.

12. Procédé selon l'une des revendications précédentes, **caractérisé en ce que** le polymère thermoplastique est choisi dans le groupe comprenant le polypropylène, les polyesters, les polyamides.

13. Procédé selon l'une des revendications précédentes, **caractérisé en ce que** la matrice thermoplastique comprend au moins un polyamide.

14. Procédé selon la revendication 13, **caractérisé en ce que** le polyamide est choisi dans le groupe comprenant les homopolyamides et copolyamides aliphatiques, les polyamides semi aromatiques semi-cristallins.

15. Procédé selon la revendication 14, **caractérisé en ce que** le polyamide est un poly (hexaméthylène adipamide), un poly (ε-caproamide), leurs copolymères ou mélanges.

16. Procédé selon l'une des revendications 3 à 15, **caractérisé en ce que** le composé nucléant est choisi dans le groupe comprenant les phénylphosphonates de zinc, sodium ou calcium, les métasilicates, aluminates, métaphosphates de lithium, de zirconium, les fluorures de magnésium, de lithium, calcium. D'autres composés comme le talc, le graphite, l'oxyde d'antimoine peuvent être utilisés comme agent de nucléation.

17. Procédé selon l'une des revendications précédentes **caractérisé en ce que** la composition thermoplastique comprend des additifs choisis dans le groupe comprenant les pigments, les colorants, les stabilisateurs chaleurs et/ou lumière les composés modifiant la ténacité.

18. Procédé selon l'une des revendications précédentes, **caractérisé en ce qu'**il est destiné à la fabrication d'un corps creux présentant une épaisseur de paroi inférieure à 10 mm.

19. Procédé selon l'une des revendications précédentes **caractérisé en ce qu'**il est destiné à la fabrication d'un tube ou d'un tuyau.
